# EUROPÄISCHE PATENTSCHRIFT

(11) **EP 3 545 399 B1**
(45) Veröffentlichungstag und Bekanntmachung des Hinweises auf die Patenterteilung: **06.01.2021**
(21) Anmeldenummer: 17797134.8
(22) Anmeldetag: 08.11.2017
(51) Int. Cl.: G06F 3/0482, G06F 3/0488, G06F 3/0481, G06F 3/0484, B60K 37/06, B60W 50/10

(54) **VERFAHREN ZUM ERFASSEN EINER NUTZEREINGABE FÜR EINE EINGABEVORRICHTUNG MIT MEHREREN SCHALTELEMENTEN UND EINGABEVORRICHTUNG**
METHOD FOR CAPTURING A USER INPUT FOR AN INPUT APPARATUS HAVING A PLURALITY OF SWITCHING ELEMENTS, AND INPUT APPARATUS
PROCÉDÉ DE DÉTECTION D'UNE SAISIE D'UTILISATEUR POUR UN DISPOSITIF DE SAISIE COMPRENANT PLUSIEURS ÉLÉMENTS DE COMMUTATION ET DISPOSITIF DE SAISIE

(30) Priorität: 23.11.2016 DE 102016223176
(43) Veröffentlichungstag der Anmeldung: 02.10.2019
(73) Patentinhaber: Volkswagen Aktiengesellschaft, 38440 Wolfsburg (DE)
(72) Erfinder: ROSILIUS, Marcel, 38440 Wolfsburg (DE); ULRICH, Dominik, 38448 Wolfsburg (DE); HUWER, Wojciech, 38110 Braunschweig (DE)
(86) Internationale Anmeldenummer: PCT/EP2017/078526
(87) Internationale Veröffentlichungsnummer: WO 2018/095727

(56) Entgegenhaltungen:
- US-A1- 2013 166 146

## Beschreibung

Die vorliegende Erfindung betrifft ein Verfahren zum Erfassen einer Nutzereingabe für eine Eingabevorrichtung mit mehreren Schaltelementen. Sie betrifft ferner eine Eingabevorrichtung mit mehreren Schaltelementen, insbesondere in einem Fahrzeug.

Die Verwendung einer Vielzahl von elektronischen und elektronisch steuerbaren Einrichtungen, insbesondere in modernen Fahrzeugen, führt zu einem Bedarf an Möglichkeiten, Nutzereingaben zu erfassen und zu verarbeiten. Insbesondere können Einrichtungen oder einzelne ihrer Komponenten durch Schaltelemente angesteuert werden. Dabei ergibt sich häufig der Fall, dass mehrere Schaltflächen betätigt werden müssen, um eine bestimmte Konfiguration zu erreichen. Dabei ist ein hohes Maß an Aufmerksamkeit notwendig, um die Schaltflächen zu lokalisieren und zielgenau zu betätigen, zumal wenn ein ein Betätigungsvorgang mehrfach für verschiedene Schaltflächen ausgeführt werden muss. Dies ist besonders bei der Anwendung in einem Fahrzeug von Nachteil, da der Nutzer hier häufig der Fahrzeugführer ist, der möglichst wenig von seinen Aufgaben der Beobachtung des umgebenden Verkehrs und der Steuerung des Fahrzeugs abgelenkt werden soll.

Aus der US 2013 / 166 146 A1 ist ein Verfahren zum Erfassen einer Nutzereingabe für eine Eingabevorrichtung bekannt, bei der eine Bedienhandlung mit Markierungsgeste und Auswahlgeste ausgeführt wird. Durch die Auswahlgeste wird eines der markierten Schaltelemente ausgewählt.

Es ist die Aufgabe der vorliegenden Erfindung, ein Verfahren und eine Eingabevorrichtung der eingangs genannten Art zur Verfügung zu stellen, die eine besonders schnelle und sichere Erfassung einer Nutzereingabe ermöglichen.

Erfindungsgemäß wird diese Aufgabe durch ein Verfahren mit den Merkmalen des Anspruchs 1 und eine Eingabevorrichtung mit den Merkmalen des Anspruchs 13 gelöst. Vorteilhafte Ausgestaltungen und Weiterbildungen ergeben sich aus den abhängigen Ansprüchen.

Bei dem erfindungsgemäßen Verfahren wird eine Bedienhandlung mit einer Markierungsgeste und einer Auswahlgeste erfasst. Dabei werden anhand der Markierungsgeste zumindest ein erstes und ein weiteres Schaltelement in einer bestimmten Reihenfolge nacheinander markiert, wobei zuerst das erste Schaltelement und anschließend das zumindest eine weitere Schaltelement markiert wird. Anhand der Auswahlgeste werden die markierten Schaltelemente in der umgekehrten Reihenfolge nacheinander ausgewählt. In Abhängigkeit von den ausgewählten Schaltelementen werden Steuersignale erzeugt und ausgegeben.

Dadurch können vorteilhafterweise mittels einer einzigen Bedienhandlung mehrere Schaltelemente ausgewählt und entsprechende Steuersignale ausgegeben werden.

Die Eingabevorrichtung umfasst dabei zumindest zwei Schaltelemente, die auf an sich bekannte Weise gebildet sein können. Insbesondere können die mehreren Schaltelemente auf die gleiche Weise gebildet sein, zum Beispiel als Taster, kapazitiver Sensor oder anderer Sensor, durch den in Abhängigkeit von der Bedienhandlung eine Betätigung erfasst werden kann. Die Betätigung erfolgt auf an sich bekannte Weise, beispielsweise mittels einer Berührung einer Komponente des Schaltelements oder durch geeignetes Ausüben von Druck auf die Komponente.

Erfindungsgemäß ist die Eingabevorrichtung so gebildet, dass nacheinander für zumindest zwei der Schaltelemente eine Markierung und eine Auswahl erfassbar sind. Insbesondere ist vorgesehen, dass das Schaltelement bei einer ersten Betätigung markiert und bei einer zweiten Betätigung ausgewählt wird. Dabei kann vorgesehen sein, dass die Schaltelemente auf verschiedene Weise betätigt werden können und ein Schaltelement je nach Art der Betätigung markierbar oder auswählbar ist. Alternativ oder zusätzlich kann vorgesehen sein, dass ein Schaltelement zum Markieren und Auswählen auf die gleiche Art betätigt wird.

Bei dem Verfahren erfolgt das Markieren der Schaltelemente anhand einer Markierungsgeste und das Auswählen anhand einer Auswahlgeste. Zur Durchführung einer "Geste" im Sinne der Erfindung wird ein Betätigungsobjekt verwendet, insbesondere ein Finger des Nutzers oder ein anderes Betätigungsobjekt, etwa ein Stift. Die Geste umfasst eine bestimmte Bewegung, die mit dem Betätigungsobjekt ausgeführt wird, und kann nach an sich bekannter Art ausgestaltet sein, etwa als Zeigegeste, Tippgeste oder Wischgeste. Ferner können Gesten vorgesehen sein, die im alltäglichen Gebrauch verwendet werden, zum Beispiel Handdrehungen, Greifgesten und Kombinationen mehrerer solcher gegebenenfalls unmittelbar kurz nacheinander ausgeführter Gesten. Dabei werden der Geste anhand des Verlaufs einer von ihr umfassten Bewegung Schaltelemente zugeordnet, beispielsweise anhand von Positionen, die anhand der Geste bestimmbar sind, und die zugeordneten Schaltelemente können durch die Geste betätigt werden. Die Gesten werden dabei in einem Detektionsraum ausgeführt, wobei insbesondere vorgesehen ist, dass durch die Geste ein räumlicher Bezug zu den Schaltelementen hergestellt wird. Insbesondere kann die Geste eine Berührung einer Oberfläche und einen Bewegungsablauf entlang der Oberfläche umfassen.

Bei einer Ausbildung umfasst die Markierungsgeste und/oder die Auswahlgeste eine Berührung des ersten und des zumindest einen weiteren Schaltelements. Dadurch wird vorteilhafterweise eine besonders einfach durchzuführende Betätigung ermöglicht, wobei durch die Berührung des Schaltelements eine eindeutige räumliche Zuordnung vorgenommen werden kann. Insbesondere kann die Berührung einem Schaltelement eindeutig zugeordnet werden, sodass eine zeitliche Folge von mehreren nacheinander markierten oder ausgewählten Schaltelementen bestimmt werden kann.

Bei einer weiteren Ausbildung wird die Berührung auf einer zusammenhängenden berührungsempfindlichen Oberfläche erfasst. Insbesondere weist die Eingabevorrichtung für die Schaltelemente, für die die Markierungsgeste und die Auswahlgeste erfasst werden, eine zusammenhängende berührungsempfindliche Oberfläche auf. Insbesondere sind Bereiche der berührungsempfindlichen Oberfläche den einzelnen Schaltelementen zugeordnet. Dadurch kann vorteilhafterweise anhand einer Berührung der berührungsempfindlichen Oberfläche besonders einfach eine Geste für die Schaltelemente erfasst werden.

Die berührungsempfindliche Oberfläche ist dabei auf an sich bekannte Weise gebildet, etwa als Oberfläche eines Berührungssensors, etwa eines kapazitiven Sensors oder eines Touchelements, oder eines Touchscreens. Durch die berührungsempfindliche Oberfläche kann die Position detektiert werden, bei welcher das Betätigungsobjekt die Oberfläche berührt. Dies kann beispielsweise anhand eines resistive, kapazitiven oder piezoelektrischen Sensors erfolgen. Ferner kann ein Wärmestrom, der zum Beispiel von einer Fingerspitze eines Nutzers ausgeht, gemessen werden.

Anhand der zeitlichen Entwicklung der Berührung der berührungsempfindlichen Oberfläche können Gesten erfasst werden, beispielsweise im einfachsten Fall das Berühren der Oberfläche an einer bestimmten Position, wobei die Position einem Schaltelement zugeordnet wird. Ferner kann bei der Markierungsgeste und/oder bei der Auswahlgeste eine Bewegung auf der berührungsempfindlichen Oberfläche erfasst werden, wobei sich die Position der Berührung verändert, ohne dass die Berührung selbst unterbrochen wird, und wobei mehrere Schaltelemente nacheinander betätigt werden. In diesem Fall kann ferner eine Bewegungsrichtung oder -geschwindigkeit erfasst und bei der Auswertung der Geste berücksichtigt werden.

Bei einer Weiterbildung umfassen die Schaltelemente Schaltflächen, die mittels einer Anzeigevorrichtung angezeigt werden. Dadurch können die Schaltflächen vorteilhafterweise besonders flexibel, etwa mit veränderlichen Abmessungen, gebildet werden. Beispielsweise können die Schaltflächen auf einem Display angezeigt werden, wobei beispielsweise ein Symbol oder eine Beschriftung umfasst sein kann. Insbesondere können die Schaltflächen auf der Anzeigefläche eines Touchscreens angezeigt werden. Ferner können die Schaltelemente so gebildet sein, dass sie nach Bedarf sichtbar gemacht werden können, beispielsweise durch das Erzeugen eines Symbols, dass auf ein Schaltelement hinweist und nur dann sichtbar dargestellt wird, wenn das Schaltelement betätigt werden kann, etwa abhängig davon, ob eine mit den Schaltelementen verknüpfte Funktionalität zur Verfügung steht.

Bei einer Ausbildung ist die Markierungsgeste und/oder die Auswahlgeste als Wischgeste ausgebildet. Die Wischgeste umfasst dabei eine Berührung einer teilweise berührungsempfindlichen Oberfläche bei einer Startposition, eine Veränderung der Position der Berührung entlang einer Trajektorie sowie ein Ende der Berührung bei einer Endposition. Beispielsweise wird das Betätigungsobjekt bei der Startposition in Kontakt mit der berührungsempfindlichen Oberfläche gebracht und anschließend entlang der Trajektorie bewegt, wobei die Berührung im Wesentlichen nicht unterbrochen wird. Zum Abschluss der Wischgeste erreicht die Position der Berührung eine Endposition und die Berührung wird beendet. Die Trajektorien umfasst eine zeitlich geordnete Folge von Positionen auf der Oberfläche, die nacheinander berührt werden. Diesen Positionen können Schaltelemente zugeordnet werden. Auf diese Weise können nacheinander mehrere Schaltelemente berührt und betätigt werden. Durch die Start- und Endposition sowie die Trajektorie auf der Oberfläche kann ferner zumindest eine Richtungsinformation und/oder Geschwindigkeitsinformationen ermittelt werden. Dabei ist die räumliche Auflösung bedarfsgerecht gebildet, das heißt, eine Richtung und/oder Geschwindigkeit der Bewegung kann innerhalb des Bereichs eines Schaltelements erfassbar oder anhand der Reihenfolge der berührten Schaltelemente bestimmbar sein. Beispielsweise kann berücksichtigt werden, in welche Richtung eine Bewegung im Bereich eines Schaltelements ausgeführt wird.

Insbesondere werden die Markierungsgeste und die Auswahlgeste auf die gleiche Weise ausgeführt. Beispielsweise handelt es sich bei der Markierungsgeste und der Auswahlgeste um eine Wischgeste.

Bei einer weiteren Ausbildung umfasst die Markierungsgeste und/oder die Auswahlgeste eine zusammenhängende Bediengeste. Dadurch können vorteilhafterweise benachbarte Schaltelemente besonders einfach und schnell markiert und/oder ausgewählt werden. Als "zusammenhängende Bediengeste" wird eine Geste bezeichnet, die eine zusammenhängende Bewegung des Betätigungsobjekts umfasst. Insbesondere ist die Geste als zusammenhängende Geste entlang einer Oberfläche, etwa eine Wischgeste, ausgebildet, das heißt, bei der Geste wird die Berührung der Oberfläche nicht unterbrochen.

Es kann ein Toleranzwert vorgesehen sein, sodass etwa eine Fortsetzung einer Geste erfasst wird, wenn das Zeitintervall einer Unterbrechung der Geste, etwa der erfassten Berührung, einen bestimmten Schwellenwert nicht überschreitet. Auf diese Weise kann beispielsweise eine zusammenhängende Wischgeste erkannt werden, wenn aufgrund äußerer Umstände eine unwillkürliche Unterbrechung der Berührung erfasst wird, beispielsweise bei der Ausführung in einem fahrenden Fahrzeug oder bei technischen Schwierigkeiten der fortlaufenden Erfassung der Geste.

Ferner kann ein Parameter der Erfassung der Geste geeignet gewählt, beispielsweise ein Parameter eines kapazitiven Sensors, der die maximale Entfernung von der Oberfläche bestimmt, bei welcher ein Betätigungsobjekt als in Kontakt mit der Oberfläche detektiert wird. Auf diese Weise kann eine fortlaufende Erfassung der Geste vorgesehen sein, während das Betätigungsobjekt nicht vollständig im Kontakt mit der Oberfläche ist.

Das Ende einer Geste kann etwa dadurch erfasst werden, dass bei einer Wischgeste die Berührung der Oberfläche durch das Betätigungsobjekt beendet wird, wobei insbesondere ein bestimmtes Zeitintervall vorgesehen ist, nach dessen Ablauf das Lösen der Berührung als Beendigung der Geste erfasst wird. Alternativ oder zusätzlich kann ein Richtungswechsel der Geste erfasst und als Ende der Geste ausgewertet werden, beispielsweise indem eine Änderung der Bewegungsrichtung der Geste oder eines Abschnittes der Geste bestimmt und mit einem Schwellenwert verglichen wird.

In einer weiteren Ausführung kann vorgesehen sein, dass die Bedienhandlung anhand einer Berührung auf einer nicht zusammenhängenden berührungsempfindlichen Oberfläche erfasst wird. Insbesondere sind den Schaltflächen verschiedene, nicht zusammenhängende berührungsempfindliche Oberfläche zugeordnet, wobei beispielsweise zwischen Bereichen der Oberfläche, die den verschiedenen Schaltflächen zugeordnet sind, ein Spalt vorgesehen sein kann. Das heißt, die Geste umfasst Abschnitte zwischen der Berührung der einzelnen Bereiche der berührungsempfindlichen Oberfläche, in denen keine Berührung erfasst wird. Alternativ oder zusätzlich kann auch eine zusammenhängende berührungsempfindliche Oberfläche so ausgebildet sein, dass etwa durch Mulden oder Erhöhungen, welche eine haptisch wahrnehmbare Strukturierung der Oberfläche bewirken, die etwa bei einer Wischgeste zu einer kurzzeitigen Unterbrechung der Berührung der Oberfläche zur Folge haben.

Alternativ oder zusätzlich kann vorgesehen sein, dass die Markierungsgeste und/oder die Auswahlgeste berührungslos durchgeführt wird, beispielsweise durch eine Zeigegeste in einem Detektionsraum, durch die eine Richtung im Raum bestimmbar ist und erfasst werden kann, welchem Schaltelement die Zeigegeste zugeordnet ist, um das Schaltelement markieren oder auswählen zu können.

Bei einer Weiterbildung werden die Markierungsgeste und die Auswahlgeste als durchgehende Bedienhandlung ausgeführt. Das heißt, die Bedienhandlung umfasst eine durchgängige Geste, deren erster Abschnitt als Markierungsgeste deren zweiter Abschnitt als Auswahlgeste erfasst wird.

Bei einer weiteren Ausbildung werden bei der Bedienhandlung die Markierungsgeste und die Auswahlgeste während einer Berührung einer Oberfläche erfasst, wobei die Berührung der Oberfläche während der Bedienhandlung nicht unterbrochen wird. Dies ermöglicht vorteilhafterweise eine besonders schnelle Auswahl der Schaltelemente.

Dabei wird zwischen der Markierungsgeste und der Auswahlgeste keine Unterbrechung der Bedienhandlung, insbesondere durch eine Unterbrechung der Berührung, erfasst. Beispielsweise wird ein Betätigungsobjekt zwischen der Markierungsgeste und der Auswahlgeste nicht von der Oberfläche abgehoben. Beispielsweise kann dabei vorgesehen sein, dass die Bedienhandlung eine Bewegung auf einer zumindest teilweise berührungsempfindlichen Oberfläche umfasst, wobei zunächst die Markierungsgeste und anschließend, ohne ein zwischenzeitliches Lösen der Berührung die Auswahlgeste ausgeführt wird.

Insbesondere werden bei der Bedienhandlung die Markierungsgeste und die Auswahlgeste als Wischgesten ausgeführt, wobei eine Berührung einer Oberfläche zwischen der Markierungsgeste und der Auswahlgeste nicht unterbrochen wird. Die Bedienhandlung ist in diesem Fall als eine zusammenhängende Wischgeste ausgebildet, während der die Berührung der Oberfläche nicht unterbrochen wird. Wie oben beschrieben, kann das Ende der Markierungsgeste und/oder der Auswahlgeste erfasst werden, wenn ein Richtungswechsel der Bewegung auf der Oberfläche erfasst wird. Insbesondere kann eine Unterbrechung der Berührung, gegebenenfalls für eine Zeitdauer oberhalb eines Schwellenwerts, als Ende der Bedienhandlung bewertet werden.

Bei einer Ausbildung werden die Steuersignal erzeugt, nachdem das Ende der Bedienhandlung erfasst wurde. Das heißt, erst nach dem Abschluss der Markierungsgeste und der Auswahlgeste werden die Steuersignale erzeugt. Dadurch können die Steuersignale vorteilhafterweise abhängig davon erzeugt werden, wie die vollständige Bedienhandlung durchgeführt wurde.

Insbesondere umfasst die Auswahlgeste eine zusammenhängende Berührung, etwa eine Wischgeste, und das Ende der Bedienhandlung erfasst, wenn die Berührung gelöst wird. Ferner kann das Ende der Bedienhandlung erfasst werden, wenn bei der Auswahlgeste das erste Schaltelement, welches bei der Markierungsgeste markiert wurde, ausgewählt wird.

Alternativ können Steuersignale bereits erzeugt werden, sobald bei der Auswahlgeste eines der zuvor markierten Schaltelemente ausgewählt wird. In diesem Fall können, nachdem das Ende der Bedienhandlung erfasst wurde, weitere Steuersignal erzeugt werden.

Bei dem erfindungsgemäßen Verfahren ist vorgesehen, dass zwei oder mehr Schaltelemente in einer bestimmten Reihenfolge nacheinander markiert werden. Das heißt, die Markierungsgeste wird so gebildet, dass aufeinanderfolgend in einer bestimmten zeitlich geordneten Reihenfolge eine Betätigung der Schaltelemente verfolgt. Umfasst die Markierungsgeste beispielsweise eine Wischgeste, so kann die Betätigung der Schaltelemente durch eine Berührung eines dem Schaltelement zugeordneten Bereichs der Oberfläche betätigt und markiert werden, insbesondere durch ein Streichen über den Bereich.

In einem weiteren Schritt, insbesondere unmittelbar an die Markierungsgeste anschließend, wird eine Auswahlgeste erfasst, durch welche die zuvor markierten Schaltelemente ausgewählt werden. Dabei erfolgt die Auswahl in einer zeitlich geordneten Reihenfolge, die der umgekehrten Reihenfolge der Markierung entspricht. Das heißt, das zuletzt markierte Schaltelement wird als erstes ausgewählt und das zuerst markierte Schaltelement wird zuletzt ausgewählt.

Dabei kann vorgesehen sein, dass das zuletzt markierte Schaltelement automatisch ausgewählt wird, wenn die Auswahlgeste für das als vorletztes markierte Schaltelement erfasst wird. Auf diese Weise ist es nicht notwendig, eine separate Auswahlgeste für das zuletzt markierte Schaltelement auszuführen. Der Übergang von der Markierungsgeste zur Auswahlgeste kann in diesem Fall automatisch erfasst werden. Insbesondere kann die Bedienhandlung durchgehend gebildet werden, etwa als eine ununterbrochene Wischgeste. In diesem Fall wird zu Beginn der Bedienhandlung das erste zu markierende Schaltelement berührt und die Position der Berührung über weitere zu markierende Schaltelemente hinweg bis zu dem letzten zu markierenden Schaltelement verschoben, wobei die Berührung nicht unterbrochen wird. Es wird also eine Markierungsgeste als Wischgeste von dem ersten zu dem letzten Schaltelement durchgeführt. Beim Erreichen des letzten Schaltelements wird, ohne die Berührung zu unterbrechen, die Richtung der Bewegung umgekehrt, sodass die Position der Berührung in der nunmehr umgekehrten Reihenfolge über die weiteren Schaltelemente hinweg bis zu dem zuerst markierten Schaltelement ausgeführt wird. Beim Erreichen dieses ersten Schaltelements wird die Berührung unterbrochen, beispielsweise durch Entfernen des Fingers von der Oberfläche, wobei das Ende der Bedienhandlung erfasst wird. Das heißt, in einer durchgehenden Wischbewegung wird eine Auswahlgeste von dem letzten zu dem ersten Schaltelement durchgeführt. Dabei werden die zuvor markierten Schaltelemente ausgewählt, wenn für sie eine erneute Berührung erfasst wird. Das zuletzt markierte Schaltelement wird automatisch ausgewählt, wenn die Richtungsumkehr der Bewegung erfasst wird, das heißt, wenn die Auswahl des vorletzten Schaltelements erfasst wird, und es wird damit auch erfasst, dass die Markierungsgeste beendet und die Auswahlgeste begonnen wurde.

Bei einer Ausbildung werden die Steuersignale in Abhängigkeit davon erzeugt, ob das erste Schaltelement als letztes durch die Auswahlgeste ausgewählt wird. Insbesondere wird bestimmt, ob das erste bei der Markierungsgeste markierte Schaltelement identisch ist mit dem letzten durch die Auswahlgeste ausgewählten Schaltelement. So kann vorteilhafterweise sichergestellt werden, dass die Bedienhandlung vollständig und korrekt ausgeführt wurde. Zum Beispiel kann auf diese Weise vermieden werden, dass unerwünschte Schaltflächen ausgewählt werden, wenn die Bedienhandlung ungenau durchgeführt wurde oder der Nutzer während der Bedienhandlung die Eingabe abbrechen will. Beispielsweise kann vorgesehen sein, dass die Steuersignale nicht erzeugt werden, wenn die Auswahlgeste lediglich für eine Teilmenge der zuvor markierten Schaltelemente durchgeführt wird, etwa wenn die Auswahlgeste lediglich von dem zuletzt markierten Schaltelement bis zu dem zweiten markierten Schaltelement durchgeführt wird. Selbiges kann vorgesehen sein für den Fall, dass die Auswahlgeste über das zuerst markierte Schaltelement hinaus durchgeführt wird und etwa ein zuvor nicht markiertes Schaltelement von der Auswahlgeste umfasst ist.

Ferner kann vorgesehen sein, dass eine Meldung für einen Nutzer ausgegeben wird, wenn im Anschluss an die Bedienhandlung kein Steuersignal erzeugt wird. Dies kann beispielsweise visuell wahrnehmbar durch eine Anzeige auf einem Display und/oder durch einen Lichteffekt erfolgen, der durch die Eingabevorrichtung und insbesondere im Bereich der Schaltelemente erzeugt wird, beispielsweise durch ein Blinken oder eine Farbänderung der Schaltelemente, die zuvor markiert und/oder ausgewählt wurden, ohne dass entsprechende Steuersignale erzeugt und ausgegeben werden.

Bei einer weiteren Ausbildung wird für die markierten und/oder ausgewählten Schaltelemente eine Hervorhebung der markierten und/oder ausgewählten Schaltelemente erzeugt. Dadurch kann vorteilhafterweise eine Rückmeldung darüber gegeben werden, welche Schaltelemente zum aktuellen Zeitpunkt markiert oder ausgewählt sind. Insbesondere unterscheidet sich die Hervorhebung je nachdem, ob ein Schaltelement markiert oder ausgewählt ist, sodass ein Nutzer beispielsweise beim Ausführen der Markierungsgeste eine Rückmeldung darüber erhält, welche Schaltelemente markiert wurden, und beim anschließenden Ausführen der Auswahlgeste eine Rückmeldung darüber erhält, welche Schaltelemente bereits ausgewählt wurden oder noch ausgewählt werden können beziehungsweise ausgewählt werden müssen, um die Bedienhandlung abzuschließen.

Beispielsweise kann auf einem Schaltelement ein Symbol dargestellt werden, wobei die Hervorhebung eine Änderung eines Lichtparameters des dargestellten Symbols umfasst. Zum Beispiel kann die Hervorhebung durch eine Darstellung mit einer bestimmten Farbe, eine Veränderung der Darstellung oder einen dynamischen Effekt, etwa einen Pulsieren, erzeugt werden. Die Erzeugung der Hervorhebung kann dabei in einem dem Schaltelement zugeordneten Bereich erfolgen, beispielsweise auf einer Schaltfläche oder in einem an die Schaltfläche angrenzenden Bereich.

Alternativ oder zusätzlich kann vorgesehen sein, dass eine haptisch wahrnehmbare Rückmeldung beim Markieren und/oder Auswählen eines Schaltelements ausgegeben wird, insbesondere während der Berührung des jeweiligen Schaltelements.

Bei einer Weiterbildung wird für die ausgewählten Schaltelemente ein Funktionsstatus bestimmt, die Steuersignale werden ferner in Abhängigkeit von dem jeweiligen Funktionsstatus erzeugt und es wird in Abhängigkeit von dem Funktionsstatus eine Ausgabe erzeugt und ausgegeben. Dadurch können vorteilhafterweise für einen Nutzer Informationen über die bei dem Verfahren erzeugten Steuersignale erfassbar ausgegeben werden.

Der Funktionsstatus kann beispielsweise eine Information darüber umfassen, ob eine durch einen Schaltelement an steuerbare Funktionalität verfügbar ist. So kann etwa vorgesehen sein, dass einzelne Funktionalitäten zeitweise nicht zur Verfügung stehen und insbesondere nicht durch das Schaltelement bedienbares sind. Beispielweise kann bei einer Anwendung des Verfahrens werden Fahrzeug aufgrund gesetzlicher Regelungen die Steuerung einer bestimmten Fahrzeugkomponente während der Fahrt unzulässig sein. Ferner können die Voraussetzungen für den Betrieb einer bestimmten Funktionalität nicht vorliegen, beispielsweise wenn eine Standheizung bei niedrigem Energievorrat des Fahrzeugs nicht aktiviert werden kann. Wenn bei der Markierungs- und Auswahlgeste eine Schaltfläche markiert und ausgewählt wird, die einer aktuell nicht verfügbaren Funktionen zugeordnet ist, kann eine Ausgabe erzeugt werden, um einen nur den Nutzer darauf hinzuweisen. Beispielsweise kann das Schaltelement in einer bestimmten Weise dargestellt werden, beispielsweise mittels eines Farbparameters oder eines anderen Darstellungsparameters, insbesondere analog zur oben beschriebenen Hervorhebung markierter und/oder ausgewählter Schaltelemente.

Bei einer Ausbildung sind zumindest zwei Schaltelemente einem Funktionscluster zugeordnet und die Steuersignale werden in Abhängigkeit von denjenigen ausgewählten Schaltelementen erzeugt, die dem gleichen Funktionscluster zugeordnet sind wie das erste Schaltelement. Dadurch kann vorteilhafterweise sichergestellt werden, dass durch das erfindungsgemäße Verfahren eine Nutzereingabe für nach funktionalen Gesichtspunkten gruppierte Schaltelemente erfasst wird. Insbesondere kann eine versehentliche Bedienung von Schaltelementen vermieden werden.

Beispielsweise können einem Funktionscluster Schaltelemente zugeordnet werden, bei deren Auswahl Steuersignale für funktionell verwandte Einrichtungen oder die gleiche Einrichtung erzeugt werden. Beispielsweise kann ein Funktionscluster Lichtfunktionen oder Heizfunktionen betreffen, etwa bei einem Fahrzeug.

Insbesondere kann in diesem Fall vorgesehen sein, dass bei der Bedienhandlung als erstes ein Schaltelement markiert wird, das einem ersten Funktionscluster zugeordnet ist, das heißt, die Bedienhandlung kann anhand des ersten markierten Schaltelements dem ersten Funktionscluster zugeordnet werden. Werden nun auch Schaltelemente eines weiteren Funktionsclusters bei der Markierungsgeste markiert und bei der Auswahlgeste ausgewählt, so können diese Schaltelemente des weiteren Funktionsclusters ignoriert werden. Dabei kann zudem vorgesehen sein, dass eine Ausgabe erzeugt wird, die einen Nutzer darauf hinweist, dass ein Schaltelement ausgewählt wurde, das einem anderen Funktionscluster zugeordnet ist und für das daher keine Steuersignale erzeugt werden.

Dadurch kann vermieden werden, dass etwa bei einer Wischgeste versehentlich unerwünschte Schaltelemente markiert und ausgewählt werden. Dieses insbesondere bei einer Anwendung in einem Kraftfahrzeug von Vorteil, wo eine Bewegung des Fahrzeugs, beispielsweise bei Fahrbahnunebenheiten, sowie die geringe Aufmerksamkeit, welche dem Bedienvorgang zugewandt werden kann, die Gefahr einer Fehlbedienung erhöhen. Beispielsweise kann ein "Ausrutschen" bei einer Wischgeste zu einer Fehlbedienung führen, die vermieden werden kann, indem Schaltelemente eines anderen Funktionsclusters ignoriert werden. Dabei wird davon ausgegangen, dass der Nutzer gleichartige oder funktionell verwandte Eingaben vornehmen und daher Schaltelemente des gleichen Funktionsclusters auswählen will.

Alternativ oder zusätzlich können die Steuersignale auf andere Weise erzeugt werden, wenn Schaltelemente ausgewählt werden, die einem anderen Funktionscluster als dem des ersten markierten Schaltelement zugeordnet sind. Beispielsweise kann eine dem Schaltelement zugeordnete Aktion ausgeführt werden, wobei gleichzeitig eine Warnung ausgegeben wird.

Ferner kann vorgesehen sein, dass die Schaltelemente funktionell gruppiert angeordnet sind, sodass eine versehentliche Fehlauswahl eines Schaltelements vermieden werden kann. Insbesondere sind Schaltelemente, die einem Funktionscluster zugeordnet sind, aneinander angrenzend angeordnet.

Bei einer weiteren Ausbildung werden die Steuersignale an einer Einrichtung zur Erzeugung einer Lichtfunktionen oder einer Heizungsfunktion übertragen. Dadurch können vorteilhafterweise zentrale Funktionen, insbesondere bei Kraftfahrzeugen, bedient werden.

Die Steuersignale können dabei verschiedene Einstellungen und Funktionalitäten der Einrichtung betreffen, wobei die Steuersignale insbesondere so erzeugt werden, dass für die ausgewählten Schaltelemente unabhängig voneinander bestimmte den Schaltelementen zugeordnete Einstellungen vorgenommen werden. Beispielsweise können einzelne Licht- oder Heizfunktionen aktiviert und deaktiviert werden.

Die erfindungsgemäße Eingabevorrichtung umfasst mehrere Schaltelemente, eine Steuereinheit und eine Erfassungseinheit, durch die eine Bedienhandlung mit einer Markierungsgeste und einer Auswahlgeste erfassbar ist. Dabei sind anhand der Markierungsgeste zumindest ein erstes und ein weiteres Schaltelement in einer bestimmten Reihenfolge nacheinander markierbar, wobei zuerst das erste Schaltelement und anschließend das zumindest eine weitere Schaltelement markierbar ist. Anhand der Auswahlgeste sind die markierten Schaltelemente in der umgekehrten Reihenfolge nacheinander auswählbar. In Abhängigkeit von den ausgewählten Schaltelementen sind Steuersignale erzeugbar und ausgebbar.

Die erfindungsgemäße Eingabevorrichtung ist insbesondere ausgebildet, das vorstehend beschriebene erfindungsgemäße Verfahren zu implementieren. Die Eingabevorrichtung weist somit dieselben Vorteile auf wie das erfindungsgemäße Verfahren.

Insbesondere werden die Steuersignale ausgegeben, indem sie an eine Einrichtung des Fahrzeugs, etwa eine Einrichtung zur Erzeugung einer Licht- oder einer Heizungsfunktion übertragen werden. Die Steuersignale können dabei Einstellungen und/oder Funktionalitäten der jeweiligen Einrichtung betreffen. Ferner können die Steuersignale eine Aktivierung oder Deaktivierung einer Funktion der Einrichtung betreffen.

Bei einer Ausbildung der erfindungsgemäßen Eingabevorrichtung umfasst die Eingabeeinheit eine berührungsempfindliche Oberfläche, etwa eines kapazitiven Sensors, eines Touchelements oder eines Touchscreens. Bei einer weiteren Ausbildung ist die berührungsempfindliche Oberfläche als zusammenhängende Oberfläche ausgebildet. So kann die Eingabe vorteilhafterweise besonders einfach erfassbar und bedienbar gestaltet werden.

Das erfindungsgemäße Fahrzeug umfasst eine Eingabevorrichtung der oben beschriebenen Art.

Die Erfindung wird nun anhand von Ausführungsbeispielen mit Bezug zu den Zeichnungen erläutert.
Figuren 1 und 2 zeigen ein Ausführungsbeispiel der erfindungsgemäßen Eingabevorrichtung in einem Fahrzeug,
Figuren 3 bis 6 zeigen ein erstes Ausführungsbeispiel des erfindungsgemäßen Verfahrens und
Figuren 7 und 8 zeigen ein weiteres Ausführungsbeispiel des erfindungsgemäßen Verfahrens.

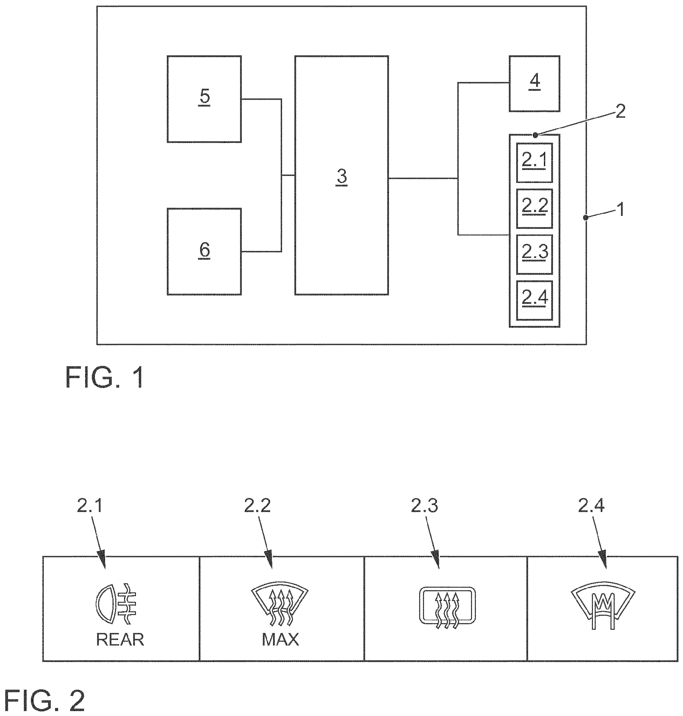

Mit Bezug zu den Figuren 1 und 2 wird ein Ausführungsbeispiel der erfindungsgemäßen Eingabevorrichtung in einem Fahrzeug erläutert.

Ein Fahrzeug 1 umfasst eine Erfassungseinheit 2 und ein Display 4, die mit einer Steuereinheit 3 gekoppelt sind. Ferner sind eine Heizungseinrichtung 5 und eine Beleuchtungseinrichtung 6 des Fahrzeugs 1 mit der Steuereinheit 3 gekoppelt.

Die Erfassungseinheit 2 weist vier Schaltelemente 2.1, 2.2, 2.3, 2.4 auf, die in Figur 2 näher dargestellt sind. Bei dem Ausführungsbeispiel ist dabei vorgesehen, dass die Erfassungseinheit 2 eine zusammenhängende berührungsempfindliche Oberfläche umfasst, auf der die Schaltelemente 2.1, 2.2, 2.3, 2.4 ausgebildet sind, wobei die Schaltelemente 2.1, 2.2, 2.3, 2.4 aneinander angrenzen und dazwischen jeweils haptisch wahrnehmbare Trennelemente ausgebildet sind, insbesondere Mulden der berührungsempfindlichen Oberfläche. Insbesondere ist die Erfassungseinheit 2 bei dem Ausführungsbeispiel als Touchelement ausgebildet.

In weiteren Ausführungsbeispielen kann vorgesehen sein, dass die Schaltelemente 2.1, 2.2, 2.3, 2.4 auf andere Weise ausgebildet sind, insbesondere nicht aneinander angrenzend. Ferner kann vorgesehen sein, dass die Erfassungseinheit 2 einen Touchscreen aufweist, auf dem die Schaltelemente 2.1, 2.2, 2.3, 2.4 insbesondere frei programmierbar darstellbar sind, wobei die berührungsempfindliche Oberfläche des Touchscreens über einer Anzeigefläche ausgebildet ist.

Die Schaltelemente 2.1, 2.2, 2.3, 2.4 betreffen verschiedene Funktionalitäten der Heizungseinrichtung 5 beziehungsweise der Beleuchtungseinrichtung 6. Durch eine Auswahl eines Schaltelements 2.1, 2.2, 2.3, 2.4 kann etwa eine Nebelschlussleuchte (Schaltelement 2.1), eine Belüftung der Vorderscheibe (Schaltelement 2.2) oder der Heckscheibe (Schaltelement 2.3), oder eine Scheibenheizung (Schaltelement 2.4) aktiviert oder deaktiviert werden. Diese Funktionalitäten sind durch Symbole verdeutlicht, die auf der berührungsempfindlichen Oberfläche in den Bereichen dargestellt werden, die den Schaltelementen 2.1, 2.2, 2.3, 2.4 zugeordnet sind. Alternativ oder zusätzlich können andere Funktionen, insbesondere auch für andere Einrichtungen des Fahrzeugs 1 anhand der Schaltelemente 2.1, 2.2, 2.3, 2.4 angesteuert werden.

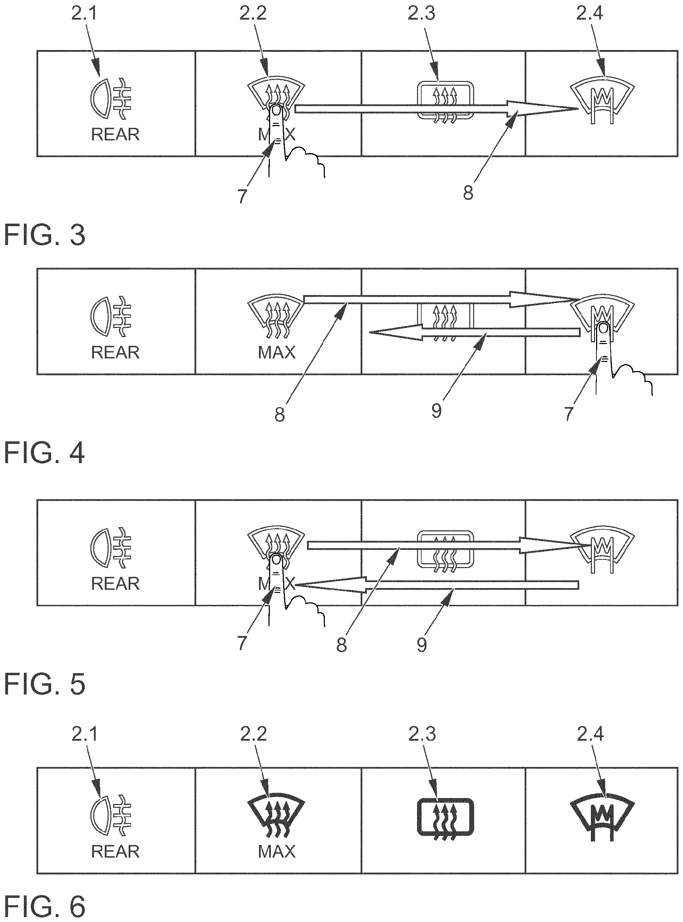

Mit Bezug zu den Figuren 3 bis 6 wird ein erstes Ausführungsbeispiel des erfindungsgemäßen Verfahrens erläutert. Dabei wird von der oben mit Bezug zu den Figuren 1 und 2 erläuterten Ausführungsbeispiel der erfindungsgemäßen Eingabevorrichtung in einem Fahrzeug ausgegangen.

Durch die Erfassungseinheit 2 wird eine Bedienhandlung erfasst, wobei mit einem Betätigungsobjekt 7, im Ausführungsbeispiel ein Finger 7 eines Nutzers, die berührungsempfindliche Oberfläche der Erfassungseinheit 2 an einer Position berührt, die einem ersten Schaltelement 2.2 zugeordnet ist. Ohne die Berührung zu lösen wird der Finger 7 nach rechts bewegt, wobei Bereiche der berührungsempfindlichen Oberfläche überstrichen werden, welche weiteren Schaltelementen 2.3, 2.4 zugeordnet sind. Dieser Bewegungsablauf definiert eine Geste, etwa nach Art einer an sich bekannten Wischgeste, die als Markierungsgeste 8 interpretiert wird. Die dabei nacheinander berührten Schaltelemente 2.2, 2.3, 2.4 werden markiert.

Bei einem weiteren Ausführungsbeispiel kann vorgesehen sein, dass die markierten Schaltelemente 2.2, 2.3, 2.4 hervorgehoben werden, beispielsweise indem die Symbole der Schaltelemente 2.2., 2.3, 2.4 in einer anderen Farbe oder Helligkeit und/oder pulsierend dargestellt werden.

Ohne die Berührung der berührungsempfindlichen Oberfläche durch den Finger 7 zu lösen, wird anschließend an die Markierungsgeste 8 eine Auswahlgeste 9 durchgeführt. Dabei bewegt sich der Finger 7 so, dass die Position, an welcher der Finger 7 die berührungsempfindliche Oberfläche der Erfassungseinheit 2 berührt, so verschoben wird, dass die zuvor markierten Schaltelemente 2.2, 2.3, 2.4 in der umgekehrten Reihenfolge ausgewählt werden. Bei dem Ausführungsbeispiel ist vorgesehen, dass das zuletzt markierte Schaltelement 2.4 automatisch ausgewählt wird, wenn die Auswahlgeste 9 für das als vorletztes markierte Schaltelement 2.3 erfasst wird. Am Ende der Auswahlgeste 9, das heißt beim Erreichen der zuerst markierten Schaltfläche 2.2 wird die Berührung durch den Finger 7 gelöst. Dies wird als Ende der Auswahlgeste 9 und zugleich als Abschluss der Bedienhandlung erfasst.

Bei einem weiteren Ausführungsbeispiel kann vorgesehen sein, dass Schaltelemente 2.2, 2.3, 2.4, die beim Ausführen der Auswahlgeste 9 überstrichen werden, im Moment der Berührung bei der Auswahlgeste 9 hervorgehoben werden, beispielsweise auf eine der oben beschriebenen Arten, etwa durch eine Veränderung der Farbe oder einen Lichteffekt.

Bei einer frei programmierbaren Darstellung der Schaltelemente 2.1, 2.2, 2.3, 2.4, etwa auf einem Touchscreen, kann vorgesehen sein, dass die dargestellten Symbole im Bereich der Schaltelemente 2.1, 2.2, 2.3, 2.4 auf unterschiedliche Weise gebildet werden, wenn die Schaltelemente 2.1, 2.2, 2.3, 2.4 markiert oder ausgewählt wurden, wobei insbesondere verschiedene Hervorhebungen für markierte und ausgewählte Schaltelemente vorgesehen sind.

Nachdem die Bedienhandlung erfasst wurde, werden durch die Steuereinheit 3 Steuersignale erzeugt und an die Heizungseinrichtung 5 des Fahrzeugs 1 übertragen. Bei dem hier beispielhaft dargestellten Fall wird kein Steuersignal für die Beleuchtungseinrichtung 6 erzeugt, in anderen beispielhaften Fällen können alternativ oder zusätzlich Steuersignale für die Beleuchtungseinrichtung 6 erzeugt werden, insbesondere wenn ein ausgewähltes Schaltelement 2.1, 2.2, 2.3, 2.4 einer Funktionalität der Beleuchtungseinrichtung 6 zugeordnet ist.

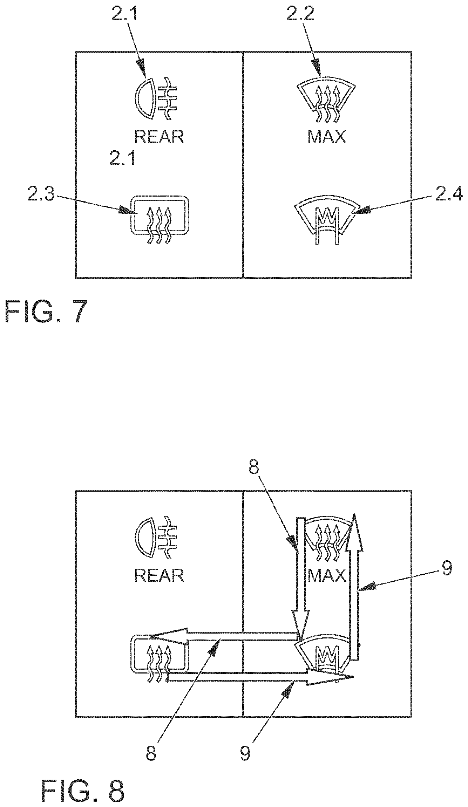

Mit Bezug zu den Figuren 7 und 8 wird ein weiteres Ausführungsbeispiel des erfindungsgemäßen Verfahrens erläutert. Dabei wird von der oben mit Bezug zu den Figuren 1 und 2 erläuterten Ausführungsbeispiel der erfindungsgemäßen Eingabevorrichtung in einem Fahrzeug ausgegangen. Ferner erfolgt die Erfassung der Bedienhandlung mit einer Markierungsgeste 8 und einer Auswahlgeste 9 prinzipiell wie bei dem oben mit Bezug zu den Figuren 3 bis 6 erläuterten ersten Ausführungsbeispiel des erfindungsgemäßen Verfahrens.

Im Unterschied zu dem ersten Ausführungsbeispiel sind die Schaltelemente 2.1, 2.2, 2.3, 2.4 bei dem in den Figuren 7 und 8 gezeigten Fall nicht nebeneinander, sondern neben- und untereinander angeordnet. Figur 8 zeigt, dass die Markierungsgeste und die Auswahlgeste nicht nur für neben- oder untereinander angeordnete Schaltelemente, sondern ebenso für eine Mischung davon anwendbar sind. Bei dem in Figur 8 gezeigten Fall werden bei der Markierungsgeste 8 nacheinander ein erstes 2.2, ein zweites 2.4 und ein drittes Schaltelements 2.3 berührt und dadurch markiert. Für die Auswahlgeste 9 wird die Markierungsgeste 8 im Wesentlichen umgekehrt, das heißt beginnend bei dem dritten Schaltelement 2.3 wird die Bewegung über das zweite Schaltelement 2.4 hin zu dem als erstes markierten Schaltelement 2.2 fortgesetzt. Beim Erreichen des als erstes markierten und zuletzt ausgewählten Schaltelements 2.2 wird die Berührung der berührungsempfindlichen Oberfläche durch den Finger 7 beendet, das heißt der Finger 7 wird von der Oberfläche abgehoben.

Anschließend an die Bedienhandlung, welche die Markierungsgeste 8 und die Auswahlgeste 9 umfasst, werden Steuersignale erzeugt und an die Heizungseinrichtung 5 übertragen, im Wesentlichen wie in dem oben erläuterten Fall des ersten Ausführungsbeispiels.

Bei einem weiteren Ausführungsbeispiel ist vorgesehen, dass die Steuersignale erzeugt werden, sobald im Anschluss an die Markierungsgeste 8 die Auswahl eines Schaltelements 2.1, 2.2, 2.3, 2.4 erfolgt.

Zudem kann vorgesehen sein, dass nach einer Markierung und/oder Auswahl eines Schaltelements 2.1, 2.2, 2.3, 2.4 eine Anzeige auf dem Display 4 des Fahrzeugs 1 ausgegeben wird, durch die ein Nutzer über die vorgenommenen Einstellungen informiert wird.

In einem weiteren Ausführungsbeispiel können Funktionscluster vorgesehen sein, denen die Schaltelemente 2.1, 2.2, 2.3, 2.4 zugeordnet sind. Bei den in den Figuren 2 bis 8 dargestellten Fällen können beispielsweise drei Schaltelemente 2.2, 2.3, 2.4 einem Funktionscluster "Beleuchtung" und ein Schaltelement 2.1 einem Funktionscluster "Heizung" zugeordnet sein. Zudem kann vorgesehen sein, dass, wenn durch die Markierungsgeste 8 und die Auswahlgeste 9 Schaltelemente markiert und ausgewählt werden, die verschiedenen Funktionscluster zugeordnet sind, Steuersignale nur für die Schaltelemente 2.1, 2.2, 2.3, 2.4 erzeugt werden, die zu dem gleichen Funktionscluster gehören wie das zuerst markierte Schaltelement 2.1, 2.2, 2.3, 2.4.

Werden beispielsweise bei dem in den Figuren 7 und 8 gezeigten Fall die Markierungsgeste 8 und die Auswahlgeste 9 so durchgeführt, dass auch ein weiteres Schaltelement 2.1 markiert und ausgewählt wird, so wird überprüft, ob alle Schaltelemente 2.1, 2.2, 2.3, 2.4 dem gleichen Funktionscluster zugeordnet sind. Wenn dabei erfasst wird, dass das zuerst markierte Schaltelement 2.2 einem anderen Funktionscluster zugeordnet ist als das zuletzt markierte Schaltelement 2.1, so wird für dieses zuletzt markierte Schaltelement 2.1 kein Steuersignal erzeugt. Zusätzlich kann vorgesehen sein, dass in diesem Fall eine Meldung für einen Benutzer erzeugt wird, die etwa auf dem Display 4 ausgegeben werden kann.

In einem weiteren Ausführungsbeispiel kann vorgesehen sein, dass die Auswahlgeste 9 so ausgeführt wird, dass die Bedienhandlung bereits vor dem Erreichen des zuerst markierten Schaltelement 2.2 beendet wird, insbesondere durch vorzeitiges Lösen der Berührung durch den Finger 7. In diesem Fall kann die Bedienhandlung als abgebrochen bewertet werden und die Ausgabe der Steuersignale kann unterbleiben. Ferner kann die Bedienhandlung als abgebrochen bewertet werden, wenn die Auswahlgeste 9 über das zuerst markierte Schaltelement 2.2 hinaus ausgeführt wird. Zusätzlich kann vorgesehen sein, dass in diesem Fall eine Meldung für einen Benutzer erzeugt wird, die etwa auf dem Display 4 ausgegeben werden kann.

In einem weiteren Ausführungsbeispiel kann vorgesehen sein, dass einzelne Schaltelemente 2.1, 2.2, 2.3, 2.4 nicht dauerhaft zur Verfügung stehen. Zum Beispiel kann eine bestimmte Funktionalität, die durch ein Schaltelement 2.1, 2.2, 2.3, 2.4 gesteuert wird, während einer Fahrt oder bei einem bestimmten Betriebszustand des Fahrzeugs 1 nicht zur Verfügung stehen. Es kann für die Schaltelemente 2.1, 2.2, 2.3, 2.4 ein Funktionsstatus bestimmt werden, der Information darüber umfasst, ob eine bestimmte Funktionalität aktuell verfügbar ist. Wird ein Schaltelement 2.1, 2.2, 2.3, 2.4 markiert und ausgewählt, dass einer aktuell nicht verfügbaren Funktionalität zugeordnet ist, so kann vorgesehen sein, dass keine entsprechenden Steuersignale erzeugt werden. Alternativ oder zusätzlich kann eine Ausgabe für einen Nutzer erzeugt werden, beispielsweise durch eine veränderte Darstellung eines Symbols im Bereich des Schaltelements 2.1, 2.2, 2.3, 2.4 und/oder durch eine Anzeige auf dem Display 4 des Fahrzeugs 1.

### Bezugszeichenliste

- 1: Fahrzeug
- 2: Erfassungseinheit
- 2.1, 2.2, 2.3, 2.4: Schaltelement
- 3: Steuereinheit
- 4: Display
- 5: Heizungseinrichtung
- 6: Beleuchtungseinrichtung
- 7: Betätigungsobjekt; Finger
- 8: Markierungsgeste
- 9: Auswahlgeste

## Patentansprüche

1. Verfahren zum Erfassen einer Nutzereingabe für eine Eingabevorrichtung mit mehreren Schaltelementen (2.1, 2.2, 2.3, 2.4), bei dem
eine Bedienhandlung mit einer Markierungsgeste (8) und einer Auswahlgeste (9) erfasst wird; wobei
anhand der Markierungsgeste (8) zumindest ein erstes und ein weiteres Schaltelement (2.1, 2.2, 2.3, 2.4) in einer bestimmten Reihenfolge durch Bewegung in einer ersten Richtung nacheinander markiert werden; wobei
zuerst das erste Schaltelement (2.1, 2.2, 2.3, 2.4) und anschließend das zumindest eine weitere Schaltelement (2.1, 2.2, 2.3, 2.4) markiert wird; und
anhand der Auswahlgeste (9) die markierten Schaltelemente (2.1, 2.2, 2.3, 2.4) in der umgekehrten Reihenfolge durch Bewegung in der umgekehrten Richtung nacheinander ausgewählt werden; und
in Abhängigkeit von den über die Markierungsgeste markierten und anschließend über die Auswahlgeste ausgewählten Schaltelementen (2.1, 2.2, 2.3, 2.4) Steuersignale erzeugt und ausgegeben werden.

2. Verfahren gemäß Anspruch 1,
**dadurch gekennzeichnet, dass**
die Markierungsgeste (8) und/oder die Auswahlgeste (9) eine Berührung des ersten (2.1, 2.2, 2.3, 2.4) und des zumindest einen weiteren Schaltelements (2.1, 2.2, 2.3, 2.4) umfasst.

3. Verfahren gemäß Anspruch 2,
**dadurch gekennzeichnet, dass**
die Berührung auf einer zusammenhängenden berührungsempfindlichen Oberfläche erfasst wird.

4. Verfahren gemäß einem der vorhergehenden Ansprüche,
**dadurch gekennzeichnet, dass**
die Schaltelemente Schaltflächen (2.1, 2.2, 2.3, 2.4) umfassen, die mittels einer Anzeigevorrichtung angezeigt werden.

5. Verfahren gemäß einem der vorhergehenden Ansprüche,
**dadurch gekennzeichnet, dass**
die Markierungsgeste (8) und/oder die Auswahlgeste (9) eine zusammenhängende Bediengeste umfasst.

6. Verfahren gemäß einem der vorhergehenden Ansprüche,
**dadurch gekennzeichnet, dass**
bei der Bedienhandlung die Markierungsgeste (8) und die Auswahlgeste (9) während einer Berührung einer Oberfläche erfasst werden, wobei die Berührung der Oberfläche während der Bedienhandlung nicht unterbrochen wird.

7. Verfahren gemäß einem der vorhergehenden Ansprüche,
**dadurch gekennzeichnet, dass**
die Steuersignale erzeugt werden, nachdem das Ende der Bedienhandlung erfasst wurde.

8. Verfahren gemäß einem der vorhergehenden Ansprüche,
**dadurch gekennzeichnet, dass**
die Steuersignale in Abhängigkeit davon erzeugt werden, ob das erste Schaltelement (2.1, 2.2, 2.3, 2.4) auch als letztes durch die Auswahlgeste (9) ausgewählt wird.

9. Verfahren gemäß einem der vorhergehenden Ansprüche,
**dadurch gekennzeichnet, dass**
für die markierten und/oder ausgewählten Schaltelemente (2.1, 2.2, 2.3, 2.4) eine Hervorhebung der markierten und/oder ausgewählten Schaltelemente (2.1, 2.2, 2.3, 2.4) erzeugt wird.

10. Verfahren gemäß einem der vorhergehenden Ansprüche,
**dadurch gekennzeichnet, dass**
für die ausgewählten Schaltelemente (2.1, 2.2, 2.3, 2.4) ein Funktionsstatus bestimmt wird;
die Steuersignale ferner in Abhängigkeit von dem jeweiligen Funktionsstatus erzeugt werden; und
in Abhängigkeit von dem Funktionsstatus eine Ausgabe erzeugt und ausgegeben wird.

11. Verfahren gemäß einem der vorhergehenden Ansprüche,
**dadurch gekennzeichnet, dass**
zumindest zwei Schaltelemente (2.1, 2.2, 2.3, 2.4) einem Funktionscluster zugeordnet sind; und
die Steuersignale in Abhängigkeit von denjenigen ausgewählten Schaltelementen (2.1, 2.2, 2.3, 2.4) erzeugt werden, die dem gleichen Funktionscluster zugeordnet sind wie das erste Schaltelement (2.1, 2.2, 2.3, 2.4).

12. Verfahren gemäß einem der vorhergehenden Ansprüche,
**dadurch gekennzeichnet, dass**
die Steuersignale an eine Einrichtung (5, 6) zur Erzeugung einer Lichtfunktion oder einer Heizungsfunktion übertragen werden.

13. Eingabevorrichtung mit
mehreren Schaltelementen (2.1, 2.2, 2.3, 2.4);
einer Steuereinheit (3); und
einer Erfassungseinheit (2), durch die eine Bedienhandlung mit einer Markierungsgeste (8) und einer Auswahlgeste (9) erfassbar ist; wobei
anhand der Markierungsgeste (8) zumindest ein erstes (2.1, 2.2, 2.3, 2.4) und ein weiteres Schaltelement (2.1, 2.2, 2.3, 2.4) in einer bestimmten Reihenfolge durch Bewegung in einer ersten Richtung nacheinander markierbar sind; wobei
zuerst das erste Schaltelement (2.1, 2.2, 2.3, 2.4) und anschließend das zumindest eine weitere Schaltelement (2.1, 2.2, 2.3, 2.4) durch die Bewegung markierbar ist; und
anhand der Auswahlgeste (9) die markierten Schaltelemente (2.1, 2.2, 2.3, 2.4) in der umgekehrten Reihenfolge nacheinander auswählbar sind; und
die Erfassungseinheit (2) derart ausgelegt ist, festzustellen, ob die zeitliche Reihenfolge der Auswahlgeste der umgekehrten zeitlichen Reihenfolge der Markierungsgeste entspricht; und
in Abhängigkeit von den über die Markierungsgeste markierten und anschließend über die Auswahlgeste ausgewählten Schaltelementen (2.1, 2.2, 2.3, 2.4) Steuersignale erzeugbar und ausgebbar sind.

14. Eingabevorrichtung gemäß Anspruch 13,
**dadurch gekennzeichnet, dass**
die Erfassungseinheit (2) eine berührungsempfindliche Oberfläche umfasst.

15. Fahrzeug (1) mit einer Eingabevorrichtung gemäß Anspruch 13 oder 14.

## Claims

1. Method for capturing a user input for an input apparatus having a plurality of switching elements (2.1, 2.2, 2.3, 2.4), with which
an operating action with a marking gesture (8) and a selection gesture (9) is captured; wherein
at least one first and one further switching element (2.1, 2.2, 2.3, 2.4) are marked successively in a specific order by movement in a first direction using the marking gesture (8); wherein
first, the first switching element (2.1, 2.2, 2.3, 2.4) and subsequently the at least one further switching element (2.1, 2.2, 2.3, 2.4) is marked; and
using the selection gesture (9), the marked switching elements (2.1, 2.2, 2.3, 2.4) are successively selected in the reverse order via movement in the reverse direction; and
control signals are generated and output depending on the switching elements (2.1, 2.2, 2.3, 2.4) which are marked via the marking gesture and subsequently selected via the selection gesture.

2. Method according to claim 1,
**characterized in that**
the marking gesture (8) and/or the selection gesture (9) include a contacting of the first (2.1, 2.2, 2.3, 2.4) and the at least one further switching element (2.1, 2.2, 2.3, 2.4).

3. Method according to claim 2,
**characterized in that**
the contact is captured at a contiguous touch-sensitive surface.

4. Method according to one of the preceding claims,
**characterized in that**
the switching elements comprise switching surfaces (2.1, 2.2, 2.3, 2.4) which are indicated by means of an indicator device.

5. Method according to one of the preceding claims,
**characterized in that**
the marking gesture (8) and/or the selection gesture (9) comprises a continuous operating gesture.

6. Method according to one of the preceding claims,
**characterized in that**
with the operating action, the marking gesture (8) and the selection gesture (9) are captured during a contacting of a surface, wherein the contacting of the surface is not interrupted during the operating action.

7. Method according to one of the preceding claims,
**characterized in that**
the control signals are generated after the end of the operating action is captured.

8. Method according to one of the preceding claims,
**characterized in that**
the control signals are generated depending on whether the first switching element (2.1, 2.2, 2.3, 2.4) is also selected last via the selection gesture (9).

9. Method according to one of the preceding claims,
**characterized in that**
for the marked and/or selected switching elements (2.1, 2.2, 2.3, 2.4), an emphasis of the marked and/or selected switching elements (2.1, 2.2, 2.3, 2.4) is generated.

10. Method according to one of the preceding claims,
**characterized in that**
a function status is determined for the selected switching elements (2.1, 2.2, 2.3, 2.4);
the control signals are further generated depending on the respective function status; and
an output is generated and output depending on the function status.

11. Method according to one of the preceding claims,
**characterized in that**
at least two switching elements (2.1, 2.2, 2.3, 2.4) are associated with a function cluster; and
the control signals are generated depending on those selected switching elements (2.1, 2.2, 2.3, 2.4) which are associated with the same function cluster as the first switching element (2.1, 2.2, 2.3, 2.4).

12. Method according to one of the preceding claims,
**characterized in that**
the control signals are transmitted to a device (5, 6) for generating a light function or a heating function.

13. Input apparatus having
a plurality of switching elements (2.1, 2.2, 2.3, 2.4);
a control unit (3); and
a capture unit (2) by means of which an operating action with a marking gesture (8) and a selection gesture (9) can be captured; wherein
using the marking gesture (8), at least one first switching element (2.1, 2.2, 2.3, 2.4) and a further switching element (2.1, 2.2, 2.3, 2.4) can be marked successively in a specific sequence via movement in a first direction; wherein
first, the first switching element (2.1, 2.2, 2.3, 2.4) and subsequently the at least one further switching element (2.1, 2.2, 2.3, 2.4) can be marked via the movement; and
the marked switching elements (2.1, 2.2, 2.3, 2.4) can be selected successively in the reverse order using the selection gesture (9); and
the capture unit (2) is designed to establish whether the chronological order of the selection gesture corresponds to the reverse chronological order of the marking gesture; and
control signals can be generated and output depending on the switching elements (2.1, 2.2, 2.3, 2.4) which are marked via the marking gesture and subsequently selected via the selection gesture.

14. Input apparatus according to claim 13,
**characterized in that**
the capture unit (2) comprises a touch-sensitive surface.

15. Vehicle (1) having an input apparatus according to claim 13 or 14.

## Revendications

1. Procédé pour détecter une saisie d'utilisateur pour un dispositif de saisie présentant plusieurs éléments de commutation (2.1, 2.2, 2.3, 2.4), dans lequel
une manipulation d'utilisation présentant un geste de marquage (8) et un geste de sélection (9) est détectée ;
au moins un premier et un autre élément de commutation (2.1, 2.2, 2.3, 2.4) étant marqués successivement dans un ordre donné à l'aide du geste de marquage (8) par déplacement dans un premier sens ;
le premier élément de commutation (2.1, 2.2, 2.3, 2.4) étant d'abord marqué et ensuite ledit au moins un autre élément (2.1, 2.2, 2.3, 2.4) étant marqué ; et
les éléments de commutation (2.1, 2.2, 2.3, 2.4) marqués étant sélectionnés successivement dans l'ordre inverse à l'aide du geste de sélection (9) par déplacement dans le sens inverse ; et
des signaux de commande étant générés et émis en fonction des éléments de commutation (2.1, 2.2, 2.3, 2.4) marqués par le biais du geste de marquage et ensuite sélectionnés par le biais du geste de sélection.

2. Procédé selon la revendication 1,
**caractérisé en ce que**
le geste de marquage (8) et/ou le geste de sélection (9) comprend/comprennent un toucher du premier (2.1, 2.2, 2.3, 2.4) et dudit au moins un autre élément de commutation (2.1, 2.2, 2.3, 2.4).

3. Procédé selon la revendication 2,
**caractérisé en ce que**
le toucher est détecté sur une surface continue sensible au toucher.

4. Procédé selon une quelconque des revendications précédentes,
**caractérisé en ce que**
les éléments de commutation comprennent des surfaces de commutation (2.1, 2.2, 2.3, 2.4) qui sont affichées au moyen d'un dispositif d'affichage.

5. Procédé selon une quelconque des revendications précédentes,
**caractérisé en ce que**
le geste de marquage (8) et/ou le geste de sélection (9) comprend/comprennent un geste d'utilisation continu.

6. Procédé selon une quelconque des revendications précédentes,
**caractérisé en ce que**
lors de la manipulation d'utilisation, le geste de marquage (8) et le geste de sélection (9) sont détectés pendant un toucher d'une surface, le toucher de la surface n'étant pas interrompu pendant la manipulation d'utilisation.

7. Procédé selon une quelconque des revendications précédentes,
**caractérisé en ce que**
les signaux de commande sont générés après la détection de la fin de la manipulation d'utilisation.

8. Procédé selon une quelconque des revendications précédentes,
**caractérisé en ce que**
les signaux de commande sont générés en fonction du fait que le premier élément de commutation (2.1, 2.2, 2.3, 2.4) est également sélectionné en dernier par le geste de sélection (9).

9. Procédé selon une quelconque des revendications précédentes,
**caractérisé en ce que**
pour les éléments de commutation (2.1, 2.2, 2.3, 2.4) marqués et/ou sélectionnés, une mise en évidence des éléments de sélection (2.1, 2.2, 2.3, 2.4) marqués et/ou sélectionnés est générée.

10. Procédé selon une quelconque des revendications précédentes,
**caractérisé en ce que**
pour les éléments de commutation (2.1, 2.2, 2.3, 2.4) sélectionnés, un statut de fonction est déterminé ;
les signaux de commande sont en outre générés en fonction du statut de fonction respectif ; et
une émission est générée et émise en fonction du statut de fonction.

11. Procédé selon une quelconque des revendications précédentes,
**caractérisé en ce que**
au moins deux éléments de commutation (2.1, 2.2, 2.3, 2.4) sont affectés à un groupe de fonctions ; et
les signaux de commande sont générés en fonction des éléments de commutation (2.1, 2.2, 2.3, 2.4) sélectionnés qui sont affectés au même groupe de fonctions que le premier élément de commutation (2.1, 2.2, 2.3, 2.4).

12. Procédé selon une quelconque des revendications précédentes,
**caractérisé en ce que**
les signaux de commande sont transmis à un dispositif (5, 6) pour la génération d'une fonction d'éclairage ou d'une fonction de chauffage.

13. Dispositif de saisie présentant
plusieurs éléments de commutation (2.1, 2.2, 2.3, 2.4) ;
une unité de commande (3) ; et
une unité de détection (2) qui permet de détecter une manipulation d'utilisation présentant un geste de marquage (8) et un geste de sélection (9) ;
au moins un premier (2.1, 2.2, 2.3, 2.4) et un autre élément de commutation (2.1, 2.2, 2.3, 2.4) pouvant être marqués successivement dans un ordre donné à l'aide du geste de marquage (8) par déplacement dans un premier sens ;
le premier élément de commutation (2.1, 2.2, 2.3, 2.4) pouvant d'abord être marqué et ensuite l'au moins un autre élément (2.1, 2.2, 2.3, 2.4) pouvant être marqué par le déplacement ; et
les éléments de commutation (2.1, 2.2, 2.3, 2.4) marqués pouvant être sélectionnés successivement dans l'ordre inverse à l'aide du geste de sélection (9) ; et
l'unité de détection (2) étant conçue pour constater si l'ordre temporel du geste de sélection correspond à l'ordre temporel inverse du geste de marquage ; et
des signaux de commande pouvant être générés et émis en fonction des éléments de commutation (2.1, 2.2, 2.3, 2.4) marqués par le biais du geste de marquage et ensuite sélectionnés par le biais du geste de sélection.

14. Dispositif de saisie selon la revendication 13,
**caractérisé en ce que**
l'unité de détection (2) comprend une surface sensible au toucher.

15. Véhicule (1) présentant un dispositif de saisie selon la revendication 13 ou 14.
